# EUROPÄISCHE PATENTANMELDUNG

(11) **EP 2 020 517 A2**
(43) Veröffentlichungstag der Anmeldung: **04.02.2009**
(21) Anmeldenummer: 08160311.0
(22) Anmeldetag: 14.07.2008
(51) Int. Cl.: F16D 25/0638, F16D 25/12

(54) **Kupplungsanordnung**

(30) Priorität: 28.07.2007 DE 102007035517
(71) Anmelder: ZF Friedrichshafen AG, 88046 Friedrichshafen (DE)
(72) Erfinder: Sasse, Christoph, 97422 Schweinfurt (DE)

(57) **Zusammenfassung**

Eine Kupplungsanordnung mit einem drehfest an einem Antrieb aufgenommenen Kupplungsgehäuse umfasst eine mit viskosem Medium befüllbare, eine Mehrzahl von Reibelementen (27,24) aufnehmende Kühlkammer (34) und eine ebenfalls mit viskosem Medium befüllbare Druckkammer (36), die gegenüber der Kühlkammer zumindest durch einen in Achsrichtung verlagerbaren Kupplungskolben (32) abgetrennt ist. Wenigstens ein erstes Reibelement ist mit dem Kupplungsgehäuse und wenigstens ein zweites Reibelement mit einem Abtriebsorgan drehbar. Die Reibelemente, von denen wenigstens jeweils eines mit Fluidförderflächen zur Erzeugung einer Förderzirkulation versehen ist, sind mittels des Kupplungskolbens für eine Reibwechselwirkung miteinander in Wirkverbindung bringbar. Es ist weiterhin eine die Versorgung von Kühlkammer und Druckkammer mit viskosem Medium beeinflussende Steuerung (90) vorgesehen. Durch die Steuerung ist zumindest bei vorbestimmten Betriebsphasen mit durch den Kupplungskolben (32) aufgehobener Reibwechselwirkung zwischen den Reibelementen (22,24) eine Reduzierung des in der Kühlkammer (34) enthaltenen viskosen Mediums bis zum Erreichen eines vorbestimmten Befüllungsgrades in der Kühlkammer (32) herbei führbar.

## Beschreibung

Die vorliegende Erfindung betrifft eine Kupplungsanordnung gemäß dem Oberbegriff des Anspruches 1.

Durch die DE 102 34 822 A1 ist eine Kupplungsanordnung mit einem drehfest an einem Antrieb aufgenommenen Kupplungsgehäuse bekannt, wobei dieses Kupplungsgehäuse in mehrere Kammerabschnitte aufgeteilt ist, die jeweils mit viskosem Medium, nachfolgend kurz als Fördermedium bezeichnet, befüllbar sind. Ein erster Kammerabschnitt dient zur Aufnahme von ersten und zweiten Reibelementen, die durch einen in Achsrichtung verlagerbaren Kupplungskolben in Wirkverbindung miteinander bringbar sind, um auf diese Weise ein Drehmoment vom Kupplungsgehäuse, mit welchem zumindest ein erstes Reibelement verbunden ist, auf ein Abtriebsorgan, das mit zumindest einem zweiten Reibelement drehfest ist, zu übertragen. Die hierbei entstehende Reibungswärme zwischen den Reibelementen soll durch das Fördermedium aus dem Kupplungsgehäuse herausgeführt werden, weshalb dessen die Reibelemente umschließender Kammerabschnitt als Kühlkammer wirksam ist. Diese Kühlkammer ist durch den Kupplungskolben gegenüber einer Druckkammer abgedichtet, die an der Gegenseite des Kupplungskolbens vorgesehen ist. Die Druckkammer verfügt ebenso wie die Kühlkammer jeweils über eine Verbindung zu einer externen Druckquelle, um Fördermedium zuführen zu können. Die Bemessung des Fördermediums in der Kühl- oder in der Druckkammer erfolgt üblicherweise entsprechend den Vorgaben einer Steuerung.

Die ersten und zweiten Reibelemente der bekannten Kupplungsanordnung sind mit Fluidförderflächen zur Erzeugung einer starken Förderzirkulation in der Kühlkammer versehen, wobei diese Förderzirkulation die durch eine Fluidförderpumpe bewirkte Frischfluidzufuhr um ein Vielfaches übersteigt und dadurch für eine hervorragende Wärmeaustauschwirkung sorgt. Diese Wärmeaustauschwirkung ist insbesondere dann besonders effizient, wenn die Kühlkammer zum einen mit dem Fördermedium zumindest weitgehend befüllt ist, und zum anderen zwischen den Reibelementen ein beträchtlicher Drehzahlunterschied besteht, da sich dann, bedingt durch die Fluidförderflächen, eine starke Förderzirkulation um die Reibelemente einstellt. Problematisch bei einer derartigen Kupplungsanordnung ist allerdings, dass durch diese starke Förderzirkulation dann, wenn bei ausgerücktem Kupplungskolben eine Reibwechselwirkung zwischen den Reibelementen aufgehoben sein soll, aufgrund hierdurch bewirkter hoher Schleppmomente eine unerwünschte Wirkverbindung der Reibelementen untereinander ausgelöst wird. Hierdurch entsteht an einem die Kupplungsanordnung aufnehmenden Kraftfahrzeug ein Vortrieb, der bei Stillstandsphasen, wie beispielsweise bei einem Ampelstopp, weggebremst werden muss, und sich, bezogen auf die Energiebilanz dieses Kraftfahrzeuges, negativ auswirkt.

Der Erfindung liegt die Aufgabe zugrunde, eine Kupplungsanordnung, die zumindest über eine Kühlkammer, eine Druckkammer und einen axial verlagerbaren Kupplungskolben verfügt, zumindest in vorbestimmten Stillstandsphasen eines Kraftfahrzeugs derart zu betreiben, dass eine unerwünschte Drehmomentübertragung über Reibelemente der Kupplungsanordnung wirksam vermieden wird.

Erfindungsgemäß wird diese Aufgabe durch eine Kupplungsanordnung gelöst, bei welcher der Befüllstand einer zur Aufnahme von Reibelementen dienenden Kühlkammer mit nachfolgend als Fördermedium bezeichneten viskosen Medium durch eine Steuerung derart beeinflusst wird, dass bei vorbestimmten Betriebsphasen, beispielsweise bei Stillstandsphasen eines die Kupplungsanordnung aufnehmenden Kraftfahrzeuges, mit gleichzeitig durch einen Kupplungskolben aufgehobener Reibwechselwirkung zwischen den Reibelementen eine Reduzierung des in der Kühlkammer enthaltenen Fördermediums vorgenommen wird, bis ein vorbestimmter Befüllungsgrad der Kühlkammer erzielt ist, der die Ausbildung eines Luftanteils zulässt, aus welchem zusammen mit dem Fördermedium ein Fluid-Luft-Gemisch entsteht.

Die Reduzierung des Befüllungsgrades der Kühlkammer bewirkt einen Zusammenbruch der durch die Fluidförderflächen der Reibelemente bewirkten, starken Förderzirkulation um die Reibelemente, und dadurch auch eine erhebliche Reduzierung der eine Wirkverbindung zwischen den Reibelementen herstellenden Schleppmomente. Gleichzeitig trägt auch das Entstehen des Fluid-Luft-Gemisches zur Reduzierung der Schleppmomente bei.

Versuche haben gezeigt, dass bereits eine Reduzierung des Befüllungsgrades der Kühlkammer um 5 % eine deutliche Minderung der Schleppmomente auslöst, da bereits dann der Zusammenbruch der durch die Fluidförderflächen der Reibelemente bewirkten, starken Förderzirkulation um die Reibelemente einsetzt. Ensprechend rasch kann nach einem Stillstand des Kraftfahrzeuges durch Reduzierung des Befüllungsgrades der Kühlkammer die Schleppmomente herabgesetzt werden.

Umgekehrt kann bei einem Wiederanfahren des Kraftfahrzeuges ebenfalls sehr rasch das zuvor entnommene Fördermedium wieder in die Kühlkammer zurückgeführt und dadurch für eine hohe Kühlwirkung der Reibelemente gesorgt werden, da diese insbesondere beim Anfahren, was unter starkem Schlupf der Reibelemente erfolgen kann, benötigt wird.

Eine besondere Bedeutung kommt dem Erfindungsgegenstand zu, wenn die Kupplungsanordnung bei einem mit einem Vollhybrid ausgestatteten Fahrzeug wirkungsmäßig zwischen einem Antrieb, wie der Kurbelwelle einer Brennkraftmaschine, und einer Elektromaschine, angeordnet ist, und sowohl die Funktion einer Anfahrkupplung als auch die Funktion einer Trennkupplung erfüllt. Gerade bei der letztgenannten Funktion der Kupplungsanordnung würden sich beim Auftreten von Schleppmomenten erhebliche Probleme ergeben, da Momente der Brennkraftmaschine in unerwünschter Weise mit Momenten der Elektromaschine überlagert würden.

Zu den Reibelementen bleibt nachzutragen, dass erste Reibelemente mit dem Kupplungsgehäuse und zweite Reibelemente mit einem Abtriebsorgan drehfest sind. Bei dem Wirkprinzip der vorliegenden Kupplungsvorrichtung mit Fluidförderflächen sind die ersten Reibelemente in Sinne von Pumpenlamellen wirksam, während die aufgrund eventuellen Schlupfes mit geringerer Drehzahl als die ersten Reibelemente bewegten zweiten Reibelemente die Funktion von Turbinenlamellen übernehmen. Dementsprechend wird sich ein Kühlungsfluss des Fördermediums zwischen den ersten und den zweiten Reibelementen einstellen.

Vorteilhafterweise wirkt die Steuerung zur Beeinflussung der Volumenströme des Fördermediums auf Ansteuerventile in einem Hydraulikkreis ein, wobei die jeweiligen Schaltpositionen dieser Ansteuerventile mit Vorzug über Elektromagnete, die mit der Steuerung verbunden sind, beeinflusst werden können. In einer besonders vorteilhaften Ausgestaltung wird hierbei das der Kühlkammer zugeordnete Ansteuerventil durch einen Elektromagneten während vorbestimmter Betriebsphasen, wie beispielsweise in Stillstandsphasen des Kraftfahrzeugs ohne durch einen Kupplungskolben erzwungene Reibwechselwirkung zwischen den Reibelementen, in einer Schaltposition gehalten, in welcher eine Abführung von Fördermedium aus dem Kühlraum in einen Tank bewirkt wird.

Die Bestimmung des Befüllstandes der Kühlkammer erfolgt vorteilhafterweise durch Berechnung des die Fluidförderpumpe durchströmenden Volumenstromes. Sobald ein vorbestimmter Befüllstand erreicht ist, kann das Ansteuerventil in der beschriebenen Weise in seine zweite Schaltposition bewegt werden, wobei die Einstellung der jeweiligen Schaltposition des Ansteuerventils in Abhängigkeit von Daten erfolgen kann, die in einem der Steuerung zugeordneten Speicher abgelegt sind.

Die erfindungsgemäße Steuerung ist auch bei Kupplungsanordnungen verwendbar, bei denen keine Fluidförderflächen zur Erzeugung einer hohen Förderzirkulation im Kühlraum vorgesehen sind, sofern es sich auch bei diesen Kupplungsanordnungen um ein mit Fördermedium vollgefülltes System handelt. Derartige Kupplungsanordnungen sind üblicherweise als "Nasslaufkupplungen" bezeichnet.
- Fig. 1: ein Prinzip-Schaltbild eines Antriebsstranges mit einem Antriebsorgan, einer Kupplungsanordnung und einer Getriebeanordnung;
- Fig. 2: eine Längsschnittansicht der Kupplungsanordnung;
- Fig. 3: einen die Kupplungsanordnung versorgenden Hydraulikkreis mit einer Steuerung,
- Fig. 4: wie Fig. 1, aber mit einer Elektromaschine im Antriebsstrang.

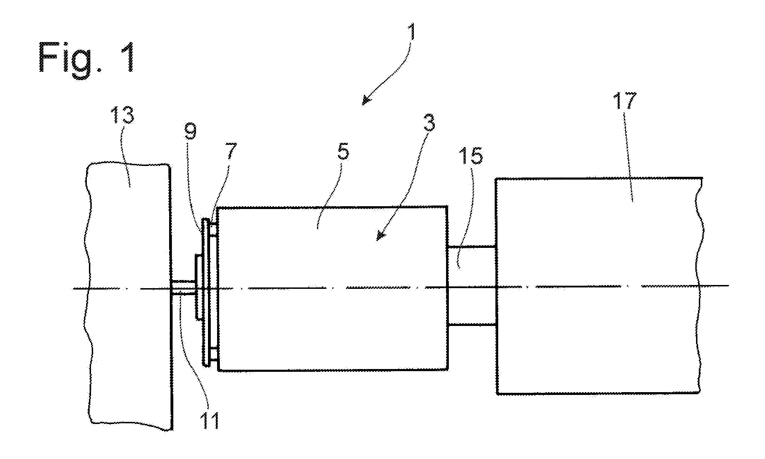

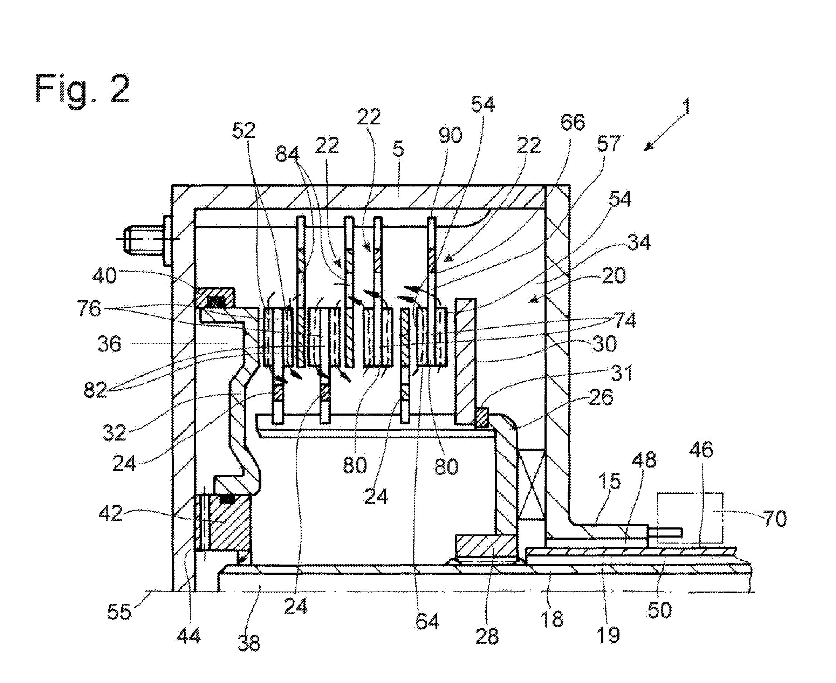

In Fig. 1 ist ein Antriebsstrang 1 mit einer erfindungsgemäßen Kupplungsanordnung 3 schematisch dargestellt. Die Kupplungsanordnung 3 umfasst ein Kupplungsgehäuse 5, das über eine Mehrzahl von Befestigungsorganen 7 und ein Kopplungselement 9, wie z.B. eine Flexplatte, mit einem Antrieb 11, beispielsweise der Kurbelwelle einer Brennkraftmaschine 13, zur gemeinsamen Drehung gekoppelt werden kann. An der vom Antrieb 11 entfernten Axialseite weist das Kupplungsgehäuse 5 eine Gehäusenabe 15 auf, die beispielsweise in eine Getriebeanordnung 17 eingreift und dort eine in Fig. 2 nur schematisch gezeigte Förderpumpe 70 zur Drehung antreibt. Zur Gehäusenabe 15 konzentrisch angeordnet ist eine Abtriebswelle 18, die mit ihrem freien Ende in den Innenraum 20 des Kupplungsgehäuses 5 ragt. Diese Abtriebswelle 18 kann beispielsweise eine Getriebeeingangswelle sein.

Im Kupplungsgehäuse 5 ist eine Mehrzahl von ersten Reibelementen 22, welche mit dem Kupplungsgehäuse 5 zur gemeinsamen Drehung gekoppelt sind, sowie eine Mehrzahl von zweiten Reibelementen 24, welche über ein Verbindungselement 26 und eine Abtriebsnabe 28 mit der Abtriebswelle 18 zur gemeinsamen Drehung gekoppelt sind, vorgesehen. Das Verbindungselement 26 und die Abtriebsnabe 28 können ebenso wie die Abtriebswelle 18 Teil eines Abtriebsorgans 19 sein. An dem Verbindungselement 26 ist ein Widerlagerelement 30 drehfest und zumindest in einer axialen Richtung durch einen Sicherungsring 31 feststehend vorgesehen. Zwischen diesem Widerlagerelement 30 und einem Kupplungskolben 32 liegen die ersten Reibelemente 22 und die zweiten Reibelemente 24. Durch den Kupplungskolben 32 wird der Innenraum 20 des Kupplungsgehäuses 5 in eine Kühlkammer 34, welche die Reibelemente 22, 24 enthält, und eine Druckkammer 36, in die über eine in der Abtriebswelle 18 vorgesehene Zentralöffnung 38 viskoses Medium, nachfolgend als Fördermedium bezeichnet, einleitbar ist, unterteilt. Um die Druckkammer 36 bezüglich der Kühlkammer 34 abzudichten, ist der im Wesentlichen ringartig ausgebildete Kupplungskolben 32 radial außen und radial innen auf jeweiligen Lagerungselementen 40, 42 unter Zwischenlagerung von Dichtungselementen fluiddicht, jedoch axial verschiebbar aufgenommen. In dem radial inneren Lagerungselement 42 sind mehrere Fluidströmungskanäle 44 vorgesehen, welche die Zufuhr von Fördermedium in die Druckkammer 36 zulassen.

Fördermedium kann auch in die Kühlkammer 34 eingeleitet oder aus dieser abgeführt werden. Zu diesem Zwecke ist beispielsweise in dem zwischen der Abtriebswelle 18 und der Gehäusenabe 15 gebildeten Raumbereich ein hohlzylindrisches Trennelement 46 vorgesehen, welches einen Strömungsraum 48 zwischen der Gehäusenabe 15 und sich selbst bildet, und welches weiter einen Strömungsraumbereich 50 zwischen der Abtriebswelle 18 und sich selbst bildet. Es kann beispielsweise durch die in der Getriebeanordnung vorgesehene Fluidförderpumpe 70 Fördermedium durch den Strömungsraumbereich 48 in die Kühlkammer 34 eingeleitet werden, in welcher es nach radial außen strömt. Das Fördermedium umströmt die Reibelemente 22, 24, im wesentlichen axial, tritt dann nach radial innen und wird über den Strömungsraumbereich 50 wieder abgezogen. Auf diese Weise kann das im Kupplungsgehäuse 5 erwärmte Fördermedium kontinuierlich ausgetauscht und durch kühleres Fördermedium ersetzt werden.

Zumindest ein Teil der ersten Reibelemente 22 und ein Teil der zweiten Reibelemente 24 trägt an beiden Axialseiten je eines Trägerbauteilsegmentes 56, 57 jeweils Reibbelagsegmente 52, 54. Diesen Reibbelagsegmenten 52, 54 liegt jeweils ein weiteres Reibelement 22, 24 zur reibmäßigen Wechselwirkung axial gegenüber. Die verschiedenen Reibelemente 22, 24 sind am Kupplungsgehäuse 5 bzw. dem Kopplungselement 26 durch axialverzahnungsartigen Eingriff drehfest und in Richtung der Drehachse 55 axial verlagerbar getragen.

Die Reibelemente 22, 24 verfügen über Förderflächen 74, 76, die jeweils durch umfangsseitige Begrenzungsränder der Trägerbauteilsegmente 56, 57 der Reibelemente 22, 24 sowie durch die an den Trägerbauteilsegmenten 56, 57 befestigten Reibbelagsegmente 52, 54 gebildet sind. Die Fluidförderflächen 74 der ersten Reibelemente 22, welche mit dem Kupplungsgehäuse 5 zur gemeinsamen Drehung gekoppelt sind, wirken aufgrund der gegenüber den zweiten Reibelementen 24 höheren Drehzahl als Pumpenschaufelflächen und sorgen in ihrer Funktion als Pumpenlamellen 80 dafür, dass in ihrem Bereich eine nach radial außen geführte Förderströmung erzeugt wird. In entsprechender Weise wirken die an den zweiten Reibelementen 24 bereitgestellten Fluidförderflächen 76 als Turbinenschaufelflächen, realisiert an Turbinenlamellen 82, die das Fördermedium nach radial innen leiten. Es entsteht somit, wie durch strichlinierte Pfeile in Fig. 2 eingezeichnet, eine Förderzirkulation entsprechend derjenigen, wie sie durch Pumpenrad und Turbinenrad einer Hydrokupplung erzeugt wird.

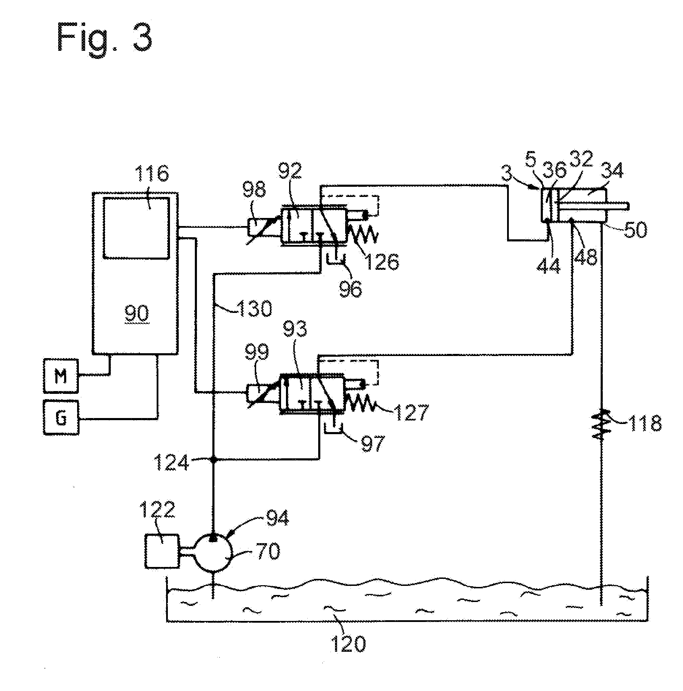

Die bei der erfindungsgemäßen Kupplungsanordnung 3 erzeugte Förderzirkulation führt, unabhängig von dem durch die Fluidförderpumpe 70 erzeugten Volumenstrom an Fördermedium, welcher beispielsweise 10 l/min betragen kann, zu einer permanenten Fluidzirkulation und Umströmung der Reibelemente 22, 24 mit einer Flüssigkeitsmenge von beispielsweise 3000 l/min. Auf diese Weise kann die im Reib- oder Schlupfbetrieb in den verschiedenen Reibelementen 22, 24 erzeugte Reibwärme vor allem bei diese Reibelemente stark beanspruchenden Anfahrvorgängen deutlich besser im Fördermedium aufgenommen werden als bei einer Kupplungsanordnung ohne Fluidförderflächen, in Fachkreisen üblicherweise als Nasslaufkupplung bezeichnet. Ein Teil des derart aufgeheizten Fördermediums wird nach Verlassen des Kupplungsgehäuses 5 über einen Kühler 118 (Fig. 3) einem Tank 120 zugeführt, aus welchem die durch einen Pumpenantrieb 122 angetriebene, zusammen mit diesem eine Druckquelle 94 bildende Fluidförderpumpe 70 wieder Fördermedium entnimmt, um dieses über einen Hydraulikkreis 130 erneut den verschiedenen Gehäuseabschnitten des Kupplungsgehäuses 5 zuzuführen.

Fig. 3 zeigt eine Steuerung 90, durch welche die in Fig. 2 dargestellte Kupplungsanordnung 3 betreibbar ist, wobei dieselbe in Fig. 3 lediglich schematisch als Druckmittelzylinder dargestellt ist. Schematisch dargestellt sind somit Kühlkammer 34, Druckkammer 36 und Kupplungskolben 32 im Kupplungsgehäuse 5 sowie dessen Anschlüsse - Fluidströmungskanäle 44 und Strömungsraum 48, 50 - für Fördermedium. Die Steuerung 90 ist über einen Hydraulikkreis 130 mit der Kupplungsanordnung 3 verbunden, und kann auch mit einer Motorsteuerung M oder einer Getriebesteuerung G verbunden sein.

Die bereits erwähnte Fluidförderpumpe 70 wird durch einen Pumpenantrieb 122 aktiviert und saugt Fördermedium aus einem Tank 120 ab. Dieses Fördermedium wird einerseits einem Eingang eines ersten Ansteuerventils 92 und, über eine Verzweigung 124, einem Eingang eines zweiten Ansteuerventils 93 zugeleitet. Der Ausgang des ersten Ansteuerventils 92 ist mit dem Fluidströmungskanal 44, der Ausgang des zweiten Ansteuerventils 93 dagegen mit dem Strömungsraum 48 verbunden.

Dem ersten Ansteuerventil 92 ist einerseits ein regelbarer Elektromagnet 98 und andererseits eine Gegenfeder 126 zugeordnet, während das zweite Ansteuerventil 93 über einen regelbaren Elektromagneten 99 und eine Gegenfeder 127 verfügt. Die beiden Elektromagneten 98 und 99 sind jeweils an der Steuerung 90 angeschlossen, die einen Speicher 116 aufweist.

Bei Betriebsphasen, beispielsweise bei Stillstandsphasen eines die Kupplungsanordnung 3 aufnehmenden Kraftfahrzeuges, bei denen der Kupplungskolben 32 in eine Axialposition bewegt ist, in welcher er auf die Reibelemente 22, 24 keine Anpresskraft ausübt, und damit keine Reibwechselwirkung zwischen den Reibelementen 22, 24 erzeugt, liegt die Situation vor, die in den Fig. 2 und 3 zeichnerisch dargestellt ist. Das Ansteuerventil 92 befindet sich hierbei ebenso wie das Ansteuerventil 93 in seiner in Fig. 3 eingezeichneten ersten Schaltposition. In dieser ersten Schaltposition werden sowohl der Elektromagnet 98 des ersten Ansteuerventils 92 als auch der Elektromagnet 99 des zweiten Ansteuerventils 93 jeweils ohne Beaufschlagung mit Strom durch die Steuerung 90 belassen, mit der Folge, dass beide Ansteuerventile 92, 93 jeweils unter der Wirkung der jeweiligen Gegenfeder 126, 127 in ihrer ersten Schaltposition verbleiben.

In dieser ersten Schaltposition bewirkt das Ansteuerventil 93 eine Verbindung der Kühlkammer 34 über deren Strömungsraum 48 mit einem Tankanschluss 97 des Ansteuerventils 93. Der Befüllgrad der Kühlkammer 34 wird hierdurch aufgrund des über den Tankanschluss 97 abströmenden Fördermediums rasch reduziert. Dies hat zur Folge, dass die Fluidzirkulation des Fördermediums, die sich zwischen den Reibelementen 22, 24 aufgrund deren mit Drehzahlunterschied bewegten Fluidförderflächen 74, 76 aufgebaut hat und unerwünschte Schleppverluste zwischen den Reibelementen 22, 24 auslöst, zusammenbricht. Dadurch werden diese Schleppverluste zwischen den Reibelementen 22, 24 zumindest erheblich reduziert. Dies führt dazu, dass vom Antrieb 11 auf das Kupplungsgehäuse 5 und damit die Reibelemente 22 geleitete Momente nicht mehr oder zumindest nur in unwesentlichem Anteil, auf die Reibelemente 24 und damit auf das Abtriebsorgan 19 gelangen können. Damit ist ein unerwünschter Vortrieb eines den Antriebsstrang 3 aufnehmenden Kraftfahrzeuges wirksam unterbunden.

Soll nach einem solchen Betriebszustand das Kraftfahrzeug zügig anfahren, so wird über die Steuerung 90 dafür gesorgt, dass beide Schaltventile 92 und 93 aus ihrer in Fig. 3 gezeigten, ersten Schaltposition in ihre zweite Schaltposition überführt werden. Hierzu werden sowohl der Elektromagnet 98 des ersten Ansteuerventils 92 als auch der Elektromagnet 99 des zweiten Ansteuerventils 93 durch die Steuerung 90 mit Strom beaufschlagt, so dass beide Ansteuerventile 92, 93 jeweils gegen die Wirkung der jeweiligen Gegenfeder 126, 127 in ihre zweite Schaltposition verlagert werden.

In dieser zweiten Schaltposition der beiden Ansteuerventile 92, 93 wird zum einen die Druckkammer 36 und zum anderen die Kühlkammer 34 mit der Druckquelle 94 verbunden, und dadurch der Druck in der Druckkammer 36 sowie der Befüllungsgrad der Kühlkammer 34 erhöht.

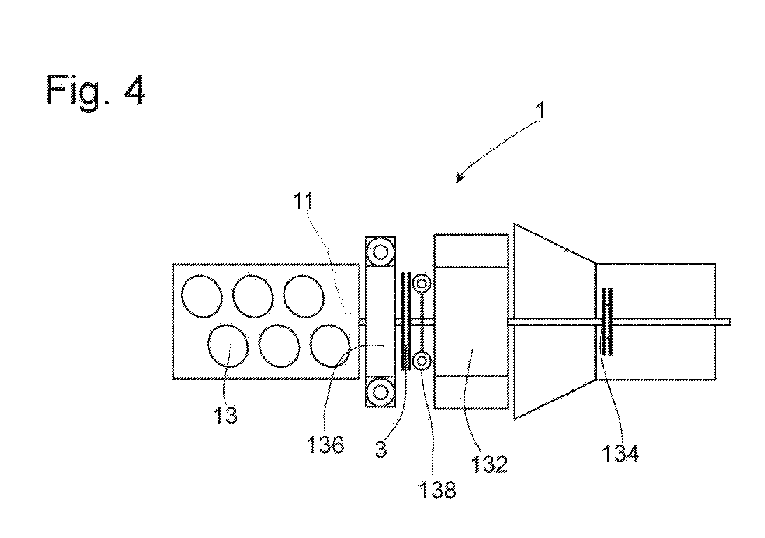

Fig. 4 zeigt eine besondere Ausgestaltung des Antriebsstranges 1, wonach dieser über eine Elektromaschine 132 verfügt. Diese ist wirkungsmäßig zwischen der erfindungsgemäßen Kupplungsanordnung 3 und einem Schaltgetriebe 134, das zum Wechsel der Übersetzungsstufen dient, angeordnet. Die Kupplungsanordnung 3 ist, wie zuvor bereits erläutert, als Anfahrkupplung verwendbar, kann darüber hinaus aber auch als Trennkupplung eingesetzt werden, um entweder nur das von der Elektromaschine erzeugte Moment in das Schaltgetriebe 134 zu übertragen, oder aber alternativ oder zusätzlich das vom Antrieb 11 gelieferte Moment. Bei einer derartigen Betriebsweise der Kupplungsanordnung sind an dieser keine nennenswerten Schleppmomente zugelassen. Wie aus Fig. 4 ebenfalls ersichtlich ist, können der Kupplungsanordnung 3 Torsionsschwingungsdämpfer 136 und 138 zugeordnet sein, und zwar sowohl an der Seite des Antriebs 11 als auch an der Seite der Elektromaschine 132.

### Bezugszeichenliste

- 1: Antriebsstrang
- 3: Kupplungsanordnung
- 5: Kupplungsgehäuse
- 7: Befestigungselemente
- 9: Kupplungselement
- 11: Antriebselement
- 13: Brennkraftmaschine
- 15: Gehäusenabe
- 17: Getriebeanordnung
- 18: Abtriebswelle
- 19: Abtriebsorgan
- 20: Innenraum des Kupplungsgehäuses
- 22: erste Reibelemente
- 24: zweite Reibelemente
- 26: Verbindungselement
- 28: Abtriebsnabe
- 30: Widerlagerelement
- 31: Sicherungsring
- 32: Kupplungskolben
- 34: Kühlkammer
- 36: Druckkammer
- 38: Zentralöffnung
- 40,42: Lagerungselement
- 44: Fluidströmungskanäle
- 46: Trennelement
- 48: Strömungsraum
- 50: Strömungsraumbereich
- 52,54: Reibbeläge
- 55: Drehachse
- 56,57: Trägerbauteilsegmente
- 58,58': Trägerring
- 70: Fluidförderpumpe
- 74, 76: Fluidförderflächen
- 80: Pumpenlamelle
- 82: Turbinenlamelle
- 90: Steuerung
- 92, 93: Ansteuerventil
- 94: Druckquelle
- 96, 97: Tankanschluss
- 98, 99: Elektromagnet
- 100: Gegendruckkammer
- 102: Versorgungseinrichtung
- 116: Speicher
- 118: Kühler
- 120: Tank
- 122: Pumpenantrieb
- 124: Verzweigung
- 126, 127: Gegenfedern
- 130: Hydraulikkreis
- 132: Elektromaschine
- 134: Schaltgetriebe
- 136, 138: Torsionsschwingungsdämpfer

## Patentansprüche

1. Kupplungsanordnung mit einem drehfest an einem Antrieb aufgenommenen Kupplungsgehäuse, umfassend eine mit viskosem Medium befüllbare, eine Mehrzahl von Reibelementen aufnehmende Kühlkammer und eine ebenfalls mit viskosem Medium befüllbare Druckkammer, die gegenüber der Kühlkammer zumindest durch einen in Achsrichtung verlagerbaren Kupplungskolben abgetrennt ist, wobei wenigstens ein erstes Reibelement mit dem Kupplungsgehäuse und wenigstens ein zweites Reibelement mit einem Abtriebsorgan drehbar ist und die Reibelemente, von denen wenigstens jeweils eines mit Fluidförderflächen zur Erzeugung einer Förderzirkulation versehen ist, mittels des Kupplungskolbens für eine Reibwechselwirkung miteinander in Wirkverbindung bringbar sind, und mit einer die Versorgung von Kühlkammer und Druckkammer mit viskosem Medium beeinflussenden Steuerung,
**dadurch gekennzeichnet,**
**dass** durch die Steuerung (90) zumindest bei vorbestimmten Betriebsphasen mit durch den Kupplungskolben (32) aufgehobener Reibwechselwirkung zwischen den Reibelementen (22, 24) eine Reduzierung des in der Kühlkammer (34) enthaltenen viskosen Mediums bis zum Erreichen eines vorbestimmten Befüllungsgrades in der Kühlkammer (34) herbei führbar ist.

2. Kupplungsanordnung nach Anspruch 1,
**dadurch gekennzeichnet,**
**dass** durch die Steuerung (90) in dem vorbestimmten Betriebsphasen mit durch den Kupplungskolben (32) aufgehobener Reibwechselwirkung zwischen den Reibelementen (22, 24) eine zeitlich begrenzte Reduzierung des viskosen Mediums in der Kühlkammer (34) vornehmbar ist.

3. Kupplungsanordnung nach Anspruch 1 oder 2,
**dadurch gekennzeichnet,**
**dass** die Steuerung (90) zumindest über ein der Kühlkammer (34) zugeordnetes Ansteuerventil (93) verfügt, das bis zum Erreichen eines vorbestimmten Befüllungsgrades der Kühlkammer (34) in einer ersten Schaltposition gehalten ist, in welcher das Ansteuerventil (93) eine Trennung der Kühlkammer (34) von einer Druckquelle (94) bewirkt.

4. Kupplungsanordnung nach Anspruch 3,
**dadurch gekennzeichnet,**
**dass** das Ansteuerventil (93) in der ersten Schaltposition eine Verbindung eines Tankanschlusses (97) mit der Kühlkammer (34) bewirkt.

5. Kupplungsanordnung nach Anspruch 3 oder 4,
**dadurch gekennzeichnet,**
**dass** das Ansteuerventil (93) durch einen Elektromagneten (99) schaltbar ist, der durch Beaufschlagung mit einem vorbestimmten Minimalstrom eine demselben zugeordnete Auslenkkraft auf das Ansteuerventil (93) in Richtung einer zweiten Schaltposition desselben ausübt, in welcher das Ansteuerventil (93) eine Verbindung der Kühlkammer (34) mit der Druckquelle (94) herstellt.

6. Kupplungsanordnung nach Anspruch 1,
**dadurch gekennzeichnet,**
**dass** die Steuerung (90) mit einer Getriebesteuerung (G) in Wirkverbindung steht.

7. Kupplungsanordnung nach einem der Ansprüche 1 bis 6,
**dadurch gekennzeichnet,**
**dass** durch die Steuerung (90) der Befüllungsgrad der Kühlkammer (34) durch Berechnung des durch eine Fluidförderpumpe (70) geförderten Volumenstroms an viskosem Medium feststellbar ist.

8. Kupplungsanordnung nach einem der Ansprüche 1 bis 7,
**dadurch gekennzeichnet,**
**dass** das Kupplungsgehäuse (5) bei einem mit einem Vollhybrid ausgestatteten Antriebsstrang (1) wirkungsmäßig zwischen einem Antrieb (11) und einer Elektromaschine (132) angeordnet ist, und sowohl die Funktion einer Anfahrkupplung als auch die Funktion einer Trennkupplung erfüllt.
